# EUROPÄISCHE PATENTSCHRIFT

(11) **EP 2 710 436 B1**
(45) Veröffentlichungstag und Bekanntmachung des Hinweises auf die Patenterteilung: **16.08.2017**
(21) Anmeldenummer: 11723903.8
(22) Anmeldetag: 20.05.2011
(51) Int. Cl.: G05B 19/042, G05B 19/418, H04L 29/06

(54) **VERFAHREN UND VORRICHTUNG ZUR PARAMETRIERUNG EINES AS-I-SLAVES**
METHOD AND DEVICE FOR PARAMETERIZING AN AS-I SLAVE
PROCÉDÉ ET DISPOSITIF DE PARAMÉTRAGE D'UN ESCLAVE AS-I

(43) Veröffentlichungstag der Anmeldung: 26.03.2014
(73) Patentinhaber: Siemens Aktiengesellschaft, 80333 München (DE)
(72) Erfinder: MACHER, Andreas, 92318 Neumarkt (DE)
(86) Internationale Anmeldenummer: PCT/EP2011/058278
(87) Internationale Veröffentlichungsnummer: WO 2012/159649

(56) Entgegenhaltungen:
- GB-A- 2 355 082
- US-A1- 2007 280 285
- US-A1- 2007 280 287
- SIMATIC NET: "AS-Interface - Einführung und Grundlagen", HANDBUCH SIEMENS, NÜRNBERG, GERMANY , Bd. C79000-G8900-C089-04 1. April 2006 (2006-04-01), Seiten 1-63, XP002516220, Gefunden im Internet: URL:http://www.automation.siemens.com/down load/internet/cache/3/1413690/p ub/de/SYH_asi_grundlagen_0.pdf [gefunden am 2009-02-20]

## Beschreibung

Die vorliegende Erfindung betrifft ein Verfahren zur Parametrierung eines oder mehrerer AS-i Slaves. Ferner betrifft die Erfindung einen AS-i Master, mittels welchem ein AS-i Slave oder mehrere AS-i Slaves parametriert werden kann/können.

Im Bereich der industriellen Automatisierungstechnik wird zur Kommunikation zwischen einzelnen Geräten einer Anlage auf der untersten Feldbusebene insbesondere AS-Interface (für: Actuator-Sensor-Interface; kurz: AS-i) genutzt. AS-Interface bildet einen Standard für die Feldbus-Kommunikation, bei welchem insbesondere Aktuatoren und Sensoren (AS-i Slaves) an eine Steuerung angebunden werden. AS-Interface ist ein Single-Master-System, d.h. ein AS-i Master pollt zyklisch alle projektierten AS-i Slaves und tauscht mit ihnen die Ein- und Ausgangsdaten aus. Ein Telegramm besteht dabei aus 4-Bit Nutzdaten. Der AS-i Master kommuniziert mit einem seriellen Übertragungsprotokoll mit den einzelnen AS-i Slaves.

Da Geräte der Aktor/Sensor Ebene zunehmend intelligenter werden führt dies zu einem größeren Bedarf an vom Anwender einzustellenden Parametern an diesen Geräten. Möchte ein Anwender einen an seinem AS-i Master angeschlossenen AS-i Slave parametrieren, so muss er derzeit mittels eines vom Anwender zu schreibenden Programms die an den AS-i Slave zu übertragenden Parameter derart aufbereiten, dass an den AS-i Master ein vorgefertigtes AS-i Telegramm gesandt wird, in welchem die Parameter für den AS-i Slave hinterlegt sind, so dass der AS-i Master lediglich dieses AS-i Telegramm an den betroffenen Slave weiterleiten muss. D.h. der AS-i Maser muss seitens des Anwenders bereits mit dem durchzureichenden AS-i Telegramm, welches die Parameter des Slaves enthält, versorgt werden. Innerhalb des AS-i Masters erfolgt keine Änderung des seitens des vom Anwender gesandten AS-i Telegramms. Je nach zu parametrierenden AS-i Slave muss der Anwender ein entsprechendes AS-i Telegramm aufbereiten, so dass der AS-i Master dieses 1:1 durchreichen kann. Dieser Vorgang ist äußerst aufwändig für den Anwender, da er für die einzelnen AS-i Slaves unterschiedliche AS-i Telegramme generieren muss.

Aus GB 2 355 082 A ein Konfigurationssystem für ein Prozesssteuernetzwerk bekannt, das einen Steuereinheit und ein erstes Netzwerkgerät umfasst. Das erste Netzwerkgerät verfügt über ein erstes Eingabe-Ausgabe-Protokoll, das auf Fieldbus oder dem HART-Protokoll basiert. Das Konfigurationssystem umfasst auch ein zweites Netzwerkgerät, das mittels AS-Interface kommuniziert. Ferner umfasst das Konfigurationssystem eine Konfigurationsdatenbank, auf die mittels einer Datenzugriffsroutine zugegriffen wird und mittels eines Konfigurators die so geladenen Daten auf das zweite Netzwerkgerät geladen werden.

Das Handbuch SIMATIC NET: AS.Interface - Einführung und Grundlagen" mit dem Dokumentenkürzel C79000-G8900-C089-04, Ausgabe 04/2006 offenbart den Master-Slave-Aufbau eines AS-Interface-Systems. Ferner ist daraus bekannt, dass Konfigurationsdaten von einem AS-i-Master über eine AS-i Master CP-Schnittstelle auf einen AS-i-Slave geladen werden. Des Weiteren offenbart das Handbuch SIMATIC NET: AS.Interface - Einführung und Grundlagen" mit dem Dokumentenkürzel C79000-G8900-C089-04, Ausgabe 04/2006 die Funktionsumfänge der Master-Profile M0 bis M4, wobei das Master-Profil M4 die Parametrierung von Kombi-Slaves erlaubt.

Die Offenlegungsschrift US 2007/280287 A1 offenbart eine Vorrichtung und ein Verfahren zur Integration von Feldgeräten in ein Prozesssteuerungssystem. Das Verfahren umfasst einen Schritt, in dem eine erste Information von einem Konfigurationswerkzeug im Prozesssteuerungssystem empfangen wird, wobei das Konfigurationswerkzeug mit einem ersten Feldgerät-Protokoll zusammenwirkt. In einem weiteren Schritt wird die erste Information in eine zweite Information umgewandelt, die zu einem zweiten Feldgerät-Protokoll gehört. In einem weiteren Verfahrensschritt wird die zweite Information an das Feldgerät im Prozesssteuerungssystem weitergeleitet. Dabei basiert das zweite Feldgerät-Protokoll auf einem Drahtlos-Protokoll.

Eine Aufgabe der vorliegenden Erfindung ist es daher das Parametrieren eines AS-i Slaves zu verbessern.

Diese Aufgabe wird gelöst durch ein Verfahren gemäß Anspruch 1, d.h. durch ein Verfahren zur Parametrierung eines AS-i Slaves mit folgenden Schritten:
- Bestimmen der Parameter des zu parametrierenden AS-i Slaves mittels eines Engineering Tools,
- Übertragen der bestimmten Parameter an einen AS-i Master mittels eines ersten Telegramms,
- Empfangen des ersten Telegramms, welches die bestimmten Parameter des zu parametrierenden AS-i Slaves enthält, mittels einer Empfangseinheit des AS-i Masters,
- Automatisches Umwandeln des empfangenen ersten Telegramms in ein AS-i Telegramm durch eine Verarbeitungseinheit des AS-i Masters, so dass das AS-i Telegramm die bestimmten Parameter des zu parametrierenden AS-i Slaves enthält,
- Senden des AS-i Telegramms, welches die bestimmten Parameter des zu parametrierenden AS-i Slaves enthält, an den zu parametrierenden AS-i Slaves mittels einer Sendeeinheit des AS-i Master,
wobei der AS-i Master mit einer Empfangseinheit ausgestattet ist, welche ein erstes Telegramm, welches Parameter für einen zu parametrierenden AS-i Slave enthält, empfangen kann, einer Verarbeitungseinheit, welche das empfangene erste Telegramm automatisch in ein AS-i Telegramm umwandeln kann, so dass das AS-i Telegramm die Parameter des zu parametrierenden AS-i Slaves enthält, und einer Sendeeinheit, welche das AS-i Telegramm, welches die Parameter des zu parametrierenden AS-i Slaves enthält, an den zu parametrierenden AS-i Slave senden kann.

Erfindungsgemäß wird zum Bestimmen der Parameter des zu parametrierenden AS-i Slaves mittels des Engineering Tools eine Gerätebeschreibungsdatei des zu parametrierenden AS-i Slaves geladen, wobei die Gerätebeschreibungsdatei den Parametersatz des zu parametrierenden Slaves umfasst. Das Laden der Gerätebeschreibungsdatei kann vorzugsweise über einen Datenspeicher (z.B. über das Internet) oder ein externes Speichermedium erfolgen. Der in der Gerätebeschreibungsdatei hinterlegte Parametersatz umfasst feste Parameter und/oder variable Parameter des abzubildenden Slaves. Liegen lediglich feste Parameter vor, so muss keine Eingabe seitens des Anwenders erfolgen. Liegen variabel Parameter vor, so ist eine Eingabe seitens des Anwenders erforderlich um die an den AS-i Slave zu übertragenden Parameter zu bestimmen. Die slavespezifischen Parametersätze der Gerätebeschreibungsdatei können vorzugsweise innerhalb des Engineering Tools zumindest teilweise verändert werden.

Ferner überprüft der AS-i Master ob die empfangenen Parameter des zu parametrierenden AS-i Slaves zu dem am AS-i Master angeschlossenen zu parametrierenden AS-i Slave passen.

Nachdem dem AS-i Master die Parameter des zu parametrierenden AS-i Slaves vorliegen erfolgt ein Umwandeln des ersten Telegramms in ein AS-i Telegramm durch den AS-i Master. Hierbei werden die durch das erste Telegramm übermittelten bestimmten Parameter durch den AS-i Master automatisch in ein für den zu parametrierenden AS-i Salve bestimmtes AS-i Telegramm umgesetzt/umgewandelt. Da das erste Telegramm kein AS-i Telegramm ist muss seitens der Verarbeitungseinheit ein Umwandeln des ersten Telegramms in das AS-i Telegramm erfolgen.

Bei dem Umwandeln des ersten Telegramms in das AS-i Telegramm durch die Verarbeitungseinheit des AS-i Masters wird das erste Telegramm in ein CTT AS-i Telegramm umgewandelt (CTT = Combined Transaction Types). Vorzugsweise wird das CTT1 und/oder CTT2 Telegramm zur Übertragung der Parameter von dem AS-i Master an den AS-i Slave verwendet. Das AS-i Telegramm enthält nach dem Umwandeln folglich die bestimmten Parameter des zu parametrierenden Slaves.

Erfindungsgemäß weisen die zu übertragenden Parameter eines zu parametrierenden AS-i Slaves eine Datengröße von größer als 4 Bit auf.

Die Aufgabenstellung wird auch durch einen entsprechenden ASi Master nach Anspruch 8 gelöst.

Vorteilhafte Weiterbildungen der Erfindung sind in den abhängigen Ansprüchen 2 bis 7 und 9 bis 10 angegeben.

Der mit der Erfindung erzielte Vorteil besteht darin, dass der AS-i Master für den Anwender eine vereinfachte Parametrierung eines AS-i Slaves ermöglicht. Dadurch, dass durch den AS-i Master eine Umwandlung des ersten Telegramms, welches die Parameter für den AS-i Slave enthält, in ein AS-i Telegramm, welches ebenso diese Parameter für den AS-i Slave enthält, automatisch durchgeführt wird, kann die Parametrierung des AS-i Slaves für den Anwender stark vereinfacht werden. Dies wird insbesondere dadurch erzielt, dass er den Telegrammaufbau des zu parametrierenden AS-i Slaves nicht kennen muss. Die Verteilung an den entsprechenden AS-i Slave erfolgt nun automatisch durch den AS-i Master, da dieser automatisch das empfangende erste Telegramm, welches Parameter des zu parametrierenden AS-i Slaves enthält, in ein AS-i Telegramm umsetzt/umwandelt, welches ebenso die Parameter des zu Parametrierenden AS-i Slaves enthält.

Da mittels der Verarbeitungseinheit des AS-i Masters ein automatisches umwandeln der Parameter des ersten Telegrams in das AS-i Telegramm erfolgt, muss seitens des Anwenders lediglich der AS-i Master mittels des ersten Telegramms mit den Parametern des AS-i Slaves versorgt werden. Sobald dem AS-i Master die Parameter des zu parametrierenden AS-i Slaves vorliegen versendet er diese automatisch über das AS-i Telegramm an den betroffenen AS-i Slave. Es kann somit eine einheitliche Kommunikationsschnittstelle zur Parametrierung eines AS-i Slaves geschaffene werden, bei welcher lediglich die Bereitstellung der Parameter des zu parametrierenden AS-i Slaves zum AS-i Master erfolgen muss.

Bei dem Übertragen der bestimmten Parameter an den AS-i Master wird eine Kommunikationsverbindung zwischen dem Engineering Tool und dem AS-i Master hergestellt. Die Kommunikationsverbindung kann beispielsweise eine direkte Verbindung zwischen dem Engineering Tool und dem AS-i Master sein. Ebenso ist es denkbar, dass eine Kommunikationsverbindung zum Übertragen der bestimmten Parameter an den AS-i Master über eine zwischengeschaltete Steuerung erfolgt. Hierbei ist die Steuerung mit dem Engineering Tool verbunden, so dass zunächst die bestimmten Parameter seitens des Engineering Tools an die Steuerung gesandt werden. Die Steuerung leitet daraufhin über eine Kommunikationsverbindung zwischen der Steuerung und dem AS-i Master (z.B. PROFINET, PROFIBUS) die bestimmten Parameter an den AS-i Master weiter, so dass dem AS-i Master die bestimmten Parameter des zu parametrierenden AS-i Slaves vorliegen. Dem AS-i Master werden somit mittels eines ersten Telegramms die bestimmten Parameter des zu parametrierenden AS-i Slaves gesandt. Das erste Telegramm ist insbesondere kein AS-i Telegramm. Vorzugsweise wird das erste Telegramm mittels Ethernet, PROFIBUS und/oder PROFINET übertragen.

Das Übertragen des AS-i Telegramms bzw. ersten Telegramms ist nicht auf einen Kommunikationszyklus zwischen den beteiligten Geräten begrenzt. In Abhängigkeit der Datengröße der zu übertragenden Parameter können ebenso mehrere Kommunikationszyklen je Telegramm erforderlich sein. Ein AS-i Telegramm, welches bestimmte Parameter enthält, kann somit ebenso mittels mehrere Kommunikationszyklen zwischen dem AS-i Master und dem AS-i Slave übertragen werden. Ebenso kann das Übertragen der Parameter eines zu parametrierenden AS-i Slaves von dem Engineering Tool zu dem AS-i Master durch mehrere Kommunikationszyklen zwischen dem AS-i Master und dem Engineering Tool erfolgen. Das Übertragen des ersten Telegramms oder AS-i Telegramms kann somit mittels eines Kommunikationszyklus zwischen den beteiligten Geräten erfolgen aber auch mittels mehrerer (> 2) Kommunikationszyklen erfolgen.

Der AS-i Master und insbesondere dessen Verarbeitungseinheit umfasst einen entsprechende Algorithmus, welcher das bei der Empfangseinheit eingehende erste Telegramm, welches die bestimmten Parameter des AS-i Slaves enthält, in das durch die Sendeeinheit ausgangsseitig ausgegebene AS-i Telegramm, welches ebenso die bestimmten Parameter des AS-i Slaves enthält, umwandeln kann. Mittels des AS-i Masters erfolgt somit ein Transformiere des ersten Telegramms in das AS-i Telegramm, so dass die Parameter des AS-i Slaves im AS-i Telegramm abgebildet werden. Die Verarbeitungseinheit des AS-i Masters ist somit derart ausgebildet, dass sie ein Umwandeln eines eingangsseitig anliegenden ersten Telegramms in ein AS-i Telegramm ermöglicht, wobei das erste Telegramm von dem AS-i Telegramm unterschiedlich ist.

Der Vorteil der Umwandlung im AS-i Master besteht darin, dass das eingangsseitig anliegendes erstes Telegramm, welches die Parameter für den AS-i Slave enthält, noch nicht für die Kommunikation zwischen dem AS-i Master und dem AS-i Slave aufbereite sein muss. Die "Übersetzung" in das AS-i Telegramm erfolgt automatisch durch die Verarbeitungseinheit des AS-i Masters. Zur Parametrierung des AS-i Slaves kann somit ein einheitliches Protokoll zur Übertragung des ersten Telegramms zwischen dem AS-i Master und der Steuerung bzw. dem Engineering Tool verwendet werden. Die Umwandlung der bestimmten Parameter in das AS-i Telegramm erfolgt automatisch durch den AS-i Master.

Für die Parametrierung von AS-i Slaves kann somit die vorhandene Kommunikation zwischen dem AS-i Master und der Steuerung bzw. dem Engineering Tool verwendet werden, so dass eine slavespezifische Aufbereitung der Parameterdaten entfallen kann.

In einer vorteilhaften Ausführungsform der Erfindung empfängt der zu parametrierende AS-i Slave das AS-i Telegramm und parametriert sich mittels der bestimmten Parameter des empfangenen AS-i Telegramms.

In einer weiteren vorteilhaften Ausführungsform der Erfindung wird zum Bestimmen der Parameter des zu parametrierenden AS-i Slaves ein Parametersatz des zu parametrierenden AS-i Slaves mittels des Engineering Tools geladen.

In einer weiteren vorteilhaften Ausführungsform der Erfindung sind im Engineering Tool Parametersätze unterschiedlicher ASi Slaves hinterlegt, wobei der geladene Parametersatz ein Parametersatz der hinterlegten Parametersätze ist. Im Engineering Tool sind somit für mehrere Slaves ihre zugehörigen Parametersätze hinterlegt. Durch die Auswahl des entsprechenden Slaves mittels des Engineering Tools kann somit ein Anwender den Parametersatz des betroffenen Slaves im Engineering Tool laden, so dass er diese nicht eingeben muss. Der Parametersatz der jeweiligen Slaves umfasst insbesondere feste Parameter und/oder variable Parameter der jeweiligen Slaves. Der Anwender kann somit anhand des slavespezifischen geladenen Parametersatzes des zu parametrierenden AS-i Slaves die Parameter des zu parametrierenden AS-i Slaves bestimmen. Liegen lediglich feste Parameter im Parametersatz vor, so kann der Anwender keine weiteren Einstellungen durchführen, so dass bereits die Parameter des zu parametrierenden Slaves bestimmt sind. Liegen hingegen variable Parameter vor, so kann der Anwender beispielsweise eine gezielte Auswahl der betroffenen variablen Parameter hinsichtlich der vorliegenden Applikation treffen. Er kann beispielsweise Wertebereiche definieren bzw. einen spezifische Wert vergeben.

In einer weiteren vorteilhaften Ausführungsform der Erfindung wird zum Bestimmen der Parameter des zu parametrierenden AS-i Slaves der geladene Parametersatz des zu parametrierenden ASi Slaves mittels des Engineering Tools modifiziert. Der geladenen Parametersatz des jeweiligen Slaves umfassen insbesondere feste Parameter und/oder variable Parameter. Liegen variable Parameter vor, so muss nach dem Laden des Parametersatzes der Anwender die variablen Parameter hinsichtlich eines vorliegenden Anwendungsszenarios mittels des Engineering Tools definieren. Die zu übertragenen variablen Parameter werden somit durch den Anwender festgelegt und somit bestimmt. Bei dem Modifizieren kann der Anwender die Parameter des zu parametrierenden AS-i Slaves somit zumindest teilweise verändern. Er kann beispielsweise unterschiedliche Wertebereiche variabler Parameter des zu parametrierenden AS-i Slaves bestimmen.

In einer weiteren vorteilhaften Ausführungsform der Erfindung gibt der AS-i Slave ein Fehlersignal aus, sofern die durch das AS-i Telegramm übertragenen bestimmten Parameter fehlerhaft sind. Dieses Fehlersignal wird an den AS-i Master gesandt und vorzugsweise an die Steuerung und/oder an das Engineering Tool weitergeleitet. Der AS-i Master, die Steuerung und/oder das Engineering Tool kann somit aufgrund des Fehlersignals ein Warnsignal (z.B. mittels einer optischen Anzeige) ausgegeben.

In einer weiteren vorteilhaften Ausführungsform der Erfindung werden im AS-i Master die bestimmten Parameter des AS-i Slaves hinterlegt. Folglich können z.B. bei einem Defekt oder Austausch eines mit dem AS-i Master verbundenen AS-i Slaves die bereits bestimmten Parameter des defekten oder ausgetauschten AS-i Slaves automatisch an den neuen bzw. reparierten AS-i Slave gesandt werden, ohne dass eine erneute Parametrierung mittels des Engineering Tools erfolgen muss. Sofern das Engineering Tool die für den AS-i Slave bestimmten Parameter über eine Steuerung an den AS-i Master gesandt hat, so ist es ebenso denkbar, dass die Parameter zusätzlich oder lediglich in der Steuerung hinterlegt werden, so dass bei einem Defekt/Austausch des AS-i Slaves die bestimmten Parameter mittels der Steuerung über den AS-i Master an den AS-i Slaves gesandt werden.

In dem AS-i Master erfolgt insbesondere eine Analyse hinsichtlich der Parameter des zu parametrierenden AS-i Slaves bezüglich der dem AS-i Master bereits durch die AS-i Kommunikation vorliegenden Informationen zu dem AS-i Slave. Der AS-i Master ist insbesondere derart ausgebildet, dass er überprüfen kann, ob die empfangenen Parameter des zu parametrierenden AS-i Slaves zu dem zu parametrierenden AS-i Slave passen.

In einer weiteren vorteilhaften Ausführungsform der Erfindung werden über das Engineering Tool Parameter mindestens zweier zu parametrierender AS-i Slaves bestimmte und die bestimmten Parameter der mindestens zwei zu parametrierenden AS-i Slaves werden mittels des ersten Telegramms an den AS-i Master übertragen. Daraufhin wandelt die Verarbeitungseinheit des AS-i Masters das empfangene erste Telegramm automatisch in ein ASi Telegramm für den jeweiligen zu parametrierenden AS-i Slave um, so dass das jeweilige AS-i Telegramm die bestimmten Parameter des zu parametrierenden AS-i Slaves enthält. Die Sendeeinheit des AS-i Masters sendet den mindestens zwei zu parametrierenden Slaves jeweils das AS-i Telegramm, welches die bestimmten Parameter des jeweiligen AS-i Slaves enthält.

In einer weiteren vorteilhaften Ausführungsform der Erfindung kann der AS-i Master mit der Empfangseinheit ein erstes Telegramm, welches Parameter für mindestens zwei zu parametrierende AS-i Slave enthält, empfangen und daraufhin das empfangene erste Telegramm automatisch in ein AS-i Telegramm für den jeweiligen zu parametrierenden AS-i Slave umwandeln, so dass das jeweilige AS-i Telegramm die bestimmten Parameter des zu parametrierenden AS-i Slaves enthält. Die Sendeeinheit des AS-i Masters kann somit den mindestens zwei zu parametrierenden Slaves jeweils das AS-i Telegramm senden, welches die bestimmten Parameter des jeweiligen AS-i Slaves enthält. Es erfolgt somit eine Abarbeitung eines "Parameterpaketes", welches von dem Engineering Tool an den AS-i Master gesendet werden kann. Das Parameterpaket kann somit die Parameter mehrerer zu parametrierender Slaves enthalten und von dem Engineering Tool an den AS-i Master gesandt werden. Insbesondere nachdem dem AS-i Master das Parameterpaket empfangen hat, kann er dieses in die entsprechenden AS-i Telegramme der zu parametrierenden AS-i Slaves umwandeln, so dass diese parametriert werden können. Es können somit die Parameter der zu parametrierenden AS-i Slaves im Engineering Tool bestimmt werden und mittels des ersten Telegramms diese Daten in einem Schritt an den AS-i Master übertragen werden. Der AS-i Master kann daraufhin die Parametrierung der einzelnen AS-i Slaves veranlassen.

In einer weiteren vorteilhaften Ausführungsform der Erfindung liegt ein System vor, welches ein Engineering Tool und einen AS-i Master umfasst, wobei das Engineering Tool derart ausgebildet ist, dass mittels des Engineering Tools Parameter des zu parametrierenden AS-i Slaves bestimmt und mittels eines ersten Telegramms an den AS-i Master übertragen werden können.

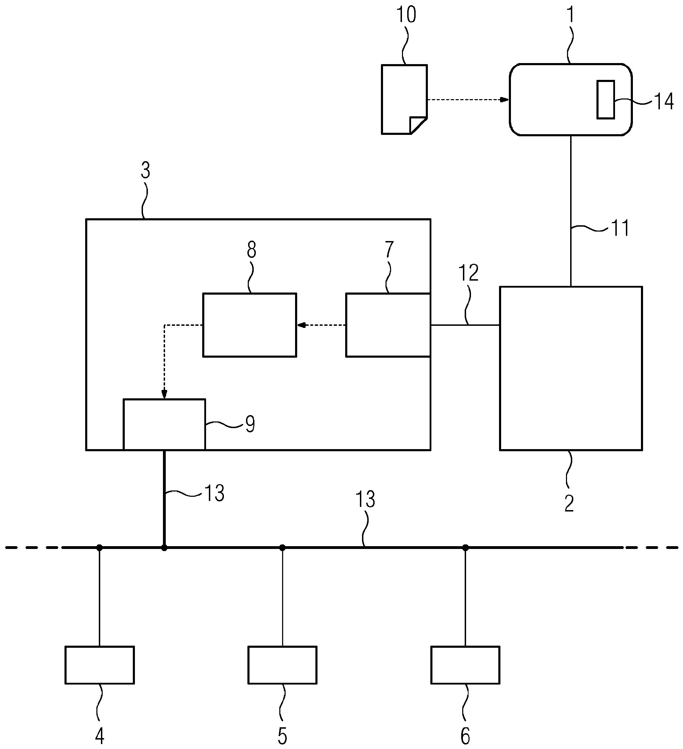

Im Folgenden wird die Erfindung und Ausgestaltung der Erfindung anhand des in der Figur dargestellten Ausführungsbeispiels näher beschrieben und erläutert.

Die Figur zeigt den schematischen Aufbau eines Teils einer industriellen Anlage. Innerhalb dieser Anlage ist ein erster AS-i Slave 4, ein zweiter AS-i Slave 5 und ein dritter AS-i Slave 6 mittels eines AS-i Busses 13 mit einem AS-i Master 3 verbunden. Die Kommunikation zwischen dem AS-i Master 3 und dem ersten, zweiten und dritten AS-i Slave 4,5,6 erfolgt mittels AS-Interface. Hierfür weist der AS-i Master 3 eine Sendeeinheit 9 auf, welche an dem AS-i Bus 13 angeschlossen ist, so dass er mit dem ersten, zweiten und dritten AS-i Slave 4,5,6 kommunizieren kann. Der AS-i Master 3 ist somit ausgangsseitig mit dem AS-i Bus 13 verbunden.

Eingangsseitig ist der AS-i Master 3 mittels einer zweiten Kommunikationsverbindung 12 mit einer Steuerung 2 (z.B. PLC, SPS) verbunden. Der AS-i Master 3 kann somit mittels der zweiten Kommunikationsverbindung 12 mit der Steuerung 2 kommunizieren. Es können somit Daten zwischen beiden Geräten 2,3 mittels eines ersten Telegramms ausgetauscht werden. Zur Übertragung der Daten zwischen der Steuerung 2 und dem AS-i Master 3 können unterschiedliche Kommunikationsmethoden (z.B. PROFINET, PROIFUBUS, Industrial Ethernet) verwendet werden. Ist beispielsweise die Steuerung 2 mittels PROFINET mit dem AS-i Master 3 verbunden, so wäre das erste Telegramm mindestens ein PROFINET Telegramm. Der AS-i Master 3 weist ausgangsseitig zum Empfangen des ersten Telegramms von der Steuerung 2 eine Empfangseinheit 7 auf. Im Fall von PROFINET ist somit die zweite Kommunikationsverbindung 12 und somit das PROFINET Kabel mit der Empfangseinheit 7 verbunden, so dass ein Datenaustausch zwischen dem AS-i Master 3 und der Steuerung 2 mittels PROFINET erfolgen kann.

Ist nun beispielsweise der zweite AS-i Slave 5 nachträglich an den AS-i Bus 13 angeschlossen worden, so muss dieser seitens des Anwenders zunächst parametriert werden, so dass der "neue" AS-i Slave 5 anlagespezifisch eingestellt ist. Hierfür muss der Anwender die entsprechenden Parameterwerte am entsprechenden AS-i Slave einstellen bzw. an diesen übertragen. Die Parametrierung des AS-i Slaves 5 kann seitens des Anwenders mittels eines Engineering Tools 1 durchgeführt werden. Zu diesem Zweck muss das Engineering Tool 1 eine Kommunikationsverbindung zu dem AS-i Master 3 aufbauen. Das Engineering Tool 1 kann entweder direkt mit dem AS-i Master 3 verbunden werden oder mit einer übergeordneten Komponente des AS-i Masters 3 verbunden werden. Im vorliegenden Ausführungsbeispiel ist das Engineering Tool 1 mittels einer ersten Kommunikationsverbindung 11 zwischen dem Engineering Tool 1 und der Steuerung 2 mit der Steuerung 2 verbunden. Das Engineering Tool 1 kann somit über die erste Kommunikationsverbindung 11 Daten und somit Parameter an die Steuerung 2 senden, woraufhin die Steuerung 2 diese Daten über die zweite Kommunikationsverbindung 12 an den AS-i Master 3 weiterleiten kann, so dass diese dem AS-i Master 3 vorliegen.

Das Engineering Tool 1 umfasst insbesondere ein computerimplementiertes Verfahren, mittels welchem Parameter eines oder mehrerer zu parametrierender AS-i Slaves bestimmt werden können. Der Anwender kann vorzugsweise mittels einer Programmieroberfläche die Parameter des zu parametrierenden AS-i Slaves bestimmen. Nachdem die Parameter des bzw. der Slaves bestimmt wurden können diese an den AS-i Master 3 übertragen werden (entweder direkt oder über zwischengeschaltete Geräte).

Zum Bestimmen der Parameter eines AS-i Slaves kann der Anwender mittels eines Datenspeichers 14 des Engineering Tools 1 auf hinterlegte Parameter unterschiedlicher AS-i Slaves zugreifen, so dass eine vereinfachte Parametrierung des zu parametrierenden AS-i Slaves erfolgen kann. Der Anwender muss folglich innerhalb des Engineering Tools 1 eine Abfrage mit dem Datenspeicher 14 durchführen, ob der zu parametrierende zweite AS-i Slave 5 in diesem Datenspeicher 14 hinterlegt ist. Ist der zweite AS-i Slave 5 in diesem Datenspeicher 14 hinterlegt, so kann mittels des Engineering Tools 1 ein Parametersatz des zweiten AS-i Slaves 5 aus diesem Datenspeicher 14 geladen werden.

Der Parametersatz eines AS-i Slaves umfasst insbesondere variable und/oder feste Parameter des AS-i Slaves. Liegen lediglich feste Parameter des zu parametrierenden AS-i Slaves vor (im vorliegenden Beispiel des zweiten AS-i Slaves 5), so muss seitens des Anwenders keine weitere Eingabe erfolgen, um die Parameter des zu parametrierenden AS-i Slaves zu bestimmen, da die Parameter bereits einen eindeutigen nicht änderbaren Parameterwert darstellen. Die festen Parameter eines Parametersatzes sind somit bereits bestimmt. Liegen hingegen variable Parameter vor, so müssen seitens des Anwenders die variablen Parameter genauer definiert werden, so dass diese bestimmt sind. Variable Parameter können beispielsweise einen Wertebereich vorgeben in welchem ein Parameterwert eines zu parametrierenden AS-i Slaves liegen kann. Der anlagespezifische Parameterwert muss jedoch erst seitens des Anwenders festgelegt und somit bestimmt werden. Ebenso kann beispielsweise zur Bestimmung der Parameter eine Einschränkung eines Wertebereiches seitens des Anwenders erforderlich sein.

Der in dem Datenspeicher 14 hinterlegte Parametersatz des zweiten AS-i Slaves 5 umfasst beispielsweise variable und/oder feste Parameter des zweiten AS-i Slaves 5. Folglich muss seitens des Anwenders eine Definition der variablen Parameter des zweiten AS-i Slaves 5 erfolgen, so dass die Parameter des zweiten AS-i Slaves 5 bestimmt sind. Anschließen können die Parameter an den AS-i Master 3 übertragen werden.

Bei einer Parametrierung mittels des Datenspeichers 14 des Engineering Tools 1 kann das Engineering Tool 1 auf interne Daten zugreifen. Sind nun beispielsweise die Parameter des zu parametrierenden AS-i Slaves nicht in dem Datenspeicher 14 des Engineering Tools 1 hinterlegt, so ist es ebenso denkbar, dass die Parameter des zu parametrierenden AS-i Slaves mittels einer Gerätebeschreibungsdatei 10 in das Engineering Tool 1 geladen werden. Hierfür wird eine slavespezifische Gerätebeschreibungsdatei 10, welche einen slavespezifischen Parametersatz enthält, in das Engineering Tool 1 geladen. Das Laden der Gerätebeschreibungsdatei 10 in das Engineering Tool 1 kann beispielsweise mittels eines externen Speichermediums (Speicherkarte, USB Stick, etc.) oder über das Internet erfolgen. Nachdem ein Anwender die Gerätebeschreibungsdatei 10 in das Engineering Tool 1 geladen hat, liegt dem Engineering Tool 1 ebenso der Parametersatz des zu parametrierenden AS-i Slaves vor, so dass der Anwender die Parameter des zu parametrierenden AS-i Slaves bestimmen kann. Der Parametersatz einer Gerätebeschreibungsdatei wird insbesondere vom Hersteller festgelegt, so dass eine Vergabe fehlerhafter Parameter des zu parametrierenden Slaves ausgeschlossen werden kann.

Der Parametersatz des zu parametrierenden AS-i Slaves erleichtert somit den Anwender das Bestimmen der Parameter des zu parametrierenden AS-i Slaves, da der Parametersatz bereits die festen und variablen Parameter des zu parametrierenden AS-i Slaves vorgibt. Für den Anwender entfällt somit das mühselige manuelle Eingeben der unterschiedlichen Parameter des zu parametrierenden AS-i Slaves.

Sofern der Anwender den Parametersatz des zu parametrierenden AS-i Slaves weder aus dem Datenspeicher 14 oder einer Gerätebeschreibungsdatei 10 in das Engineering Tool 1 laden kann, so kann er ebenso eine manuelle Eingabe der Parameter des zu parametrierenden AS-i Slaves in dem Engineering Tool 1 durchführen, so dass die Parameter des zu parametrierenden AS-i Slaves bestimmt sind.

Nach dem die Parameter des zu parametrierenden AS-i Slaves 5 durch den Anwender mittels des Engineering Tools 1 bestimmt wurden, werden die Parameter an den AS-i Master 3 übertragen. Hierbei werden die bestimmten Parameter mindestens mittels eines ersten Telegramms an den AS-i Master 3 gesandt. Im vorliegenden Fall werden die bestimmten Parameter zunächst von dem Engineering Tool 1 an die die Steuerung 2 übertragen und von dieser mittels des ersten Telegramms über die zweite Kommunikationsverbindung an den AS-i Master 3 und insbesondere dessen Empfangseinheit 7 übertragen. Der AS-i Master 3 empfängt das erste Telegramm mit seiner Empfangseinheit 7. Dieses erste Telegramm enthält die bestimmten Parameter des zu parametrierenden Slaves 5. Zur Übertragung der Parameter von der Steuerung 2 an den AS-i Master 3 kann ein Kommunikationszyklus genügen sein. Es ist aber auch ebenso denkbar, dass die bestimmten Parameter mittels des ersten Telegramms durch mehrere Kommunikationszyklen zwischen der Steuerung 2 und dem AS-i Master 3 übertragen werden. Der Begriff "Telegramm" ist insbesondere nicht auf einen Kommunikationszyklus zwischen den betroffenen beiden Geräten reduziert. Ein Telegramm kann ebenso über mehrere Kommunikationszyklen zwischen den beiden Geräten übertragen werden. Das erste Telegramm (und somit die bestimmten Parameter) kann somit innerhalb eines Kommunikationszyklus oder mehrere Kommunikationszyklen zwischen der Steuerung und dem AS-i Master übertragen werden.

Die Empfangseinheit 7 des AS-i Masters 3 empfängt die bestimmten Parameter des zu parametrierenden AS-i Slaves 5. Daraufhin erfolgt ein automatisches Umwandeln des empfangenen ersten Telegramms, welches die bestimmten Parameter des zu parametrierenden AS-i Slaves 5 umfasst, in ein AS-i Telegramm durch eine Verarbeitungseinheit 8 des AS-i Masters, so dass das AS-i Telegramm die bestimmten Parameter des zu parametrierenden AS-i Slaves 5 enthält. Die Verarbeitungseinheit 8 extrahiert somit aus dem ersten Telegramm die bestimmten Parameter des zu parametrierenden AS-i Slaves 5 und sorgt dafür, dass diese Parameter an den zu parametrierenden AS-i Slave 5 mittels eines AS-i Telegramms gesandt werden. Die Sendeeinheit 9 sendet somit das von der Verarbeitungseinheit 9 bereitgestellte AS-i Telegramm, welches die bestimmten Parameter des zu parametrierenden AS-i Slaves 5 enthält, an den zu parametrierenden AS-i Slave 5.

Der AS-i Slave 5 empfängt das für ihn bestimmte AS-i Telegramm und kann sich mittels der darin enthaltenen bestimmten Parameter parametrieren.

Zur Parametrierung eines AS-i Slaves können somit mittels eines Engineering Tools 1 Parameter des zu parametrierenden ASi Slaves über eine standardisierte Kommunikationsverbindung an die standardisierte Empfangseinheit 7 des AS-i Masters 3 übermittelt werden. Der AS-i Master 3 kann somit mit einem standardisierten ersten Telegramm versorgt werden. Daraufhin sorgt der AS-I Master 3 selbst mittels seiner Verarbeitungseinheit 8 für die automatische Umwandlung der im ersten Telegramm enthaltenen Parameter in ein AS-i Telegramm. Das Aufwendige aufbereiten der AS-i Telegramme, welche seitens des Anwenders zur Parametrierung eines AS-i Slaves selbst erzeugt werden musste, kann somit entfallen. Der Aufwand der Parametrierung eines AS-i Slaves kann somit minimiert werden. Ferner kann die Wahrscheinlichkeit einer fehlerhaften Parametrierung reduziert werden.

Eine weitere vorteilhafte Idee besteht darin, dass mittels des ersten Telegramms an den AS-i Master 3 nicht nur bestimmte Parameter eines AS-i Slaves 5 übertragen werden können, sondern dass die Parameter mindestens zweier AS-i Slaves über das erste Telegramm an den AS-i Master 3 gesandt werden können. Im Engineering Tool 1 erfolgt somit zunächst eine Bestimmung der Parameter der zu parametrierenden AS-i Slaves (z.B. zweiter und dritter AS-i Slave 5,6). Diese bestimmten Parameter der zu parametrierenden AS-i Slaves 5,6 werden mittels des ersten Telegramms zu dem AS-i Master 3 gesandt. Die bestimmten Parameter können hierfür insbesondere mittels eines Telegramms als Datenpaket übertragen werden. Der AS-i Master 3 empfängt mittels seiner Empfangseinheit 7 die bestimmten Parameter der zu parametrierenden AS-i Slaves 5,6 und wandelt daraufhin mittels seiner Verarbeitungseinheit 8 die einzelnen bestimmten Parameter der zu parametrierenden AS-i Slaves 5,6 in ein jeweiliges slavespezifisches AS-i Telegramm um, so dass die zu parametrierenden AS-i Slaves 5,6 jeweils mit den im Engineering Tool 1 für sie bestimmten Parametern versorgt werden. Auf diese Weise kann ein Anwender mittels des Engineering Tools 1 ein Datenpaket, welches aus mehreren bestimmten Parametern von zu parametrierenden AS-i Slaves 4,5,6 besteht, in einem Schritt an den AS-i Master 3 senden, woraufhin der AS-i Master 3 eine automatische Umwandelung in einzelne slavespezifische AS-i Telegramme durchführt.

Eine weitere vorteilhafte Idee besteht darin, dass der AS-i Master 3 und die Steuerung 2 jeweils einen Speicher aufweisen, in welchem sie während einer oben beschriebenen Parametrierung die bestimmten Parameter eines zu parametrierenden AS-i Slaves 4,5,6 hinterlegen. Nach einer erstmaligen Parametrierung der AS-i Slaves sind somit dem AS-i Master 3 bzw. der Steuerung 2 bereits die Parameter der parametrierten AS-i Slaves 4,5,6 bekannt. Kommt es nun zu einem Austausch eines dieser AS-i Slaves 4,5,6, so muss keine erneute Parametrierung des AS-i Slaves 4,5,6 durch den Anwender mittels des Engineering Tools 1 erfolgen, da dem AS-i Master 3 bzw. der Steuerung 2 bereits die Parameter des betroffenen AS-i Slaves 4,5,6 bekannt sind. Der AS-i Master 3 bzw. die Steuerung 2 sendet automatisch die im Speicher hinterlegten Parameter an den ausgetauschten AS-i Slave 4,5,6, so dass dieser die korrekten Parameter einstellen kann.

Eine weitere vorteilhafte Idee besteht darin, dass seitens des AS-i Master 3 eine Kontrolle der vom Engineering Tool 1 stammenden Parameter eines zu parametrierenden AS-i Slaves mit den dem AS-i Master 3 bekannten AS-i Slavedaten des zu parametrierenden AS-i Slave erfolgt. Erkennt der AS-i Master, dass die vom Engineering Tool 1 gesandten AS-i Slave Parameter nicht zu dem AS-i Slave passen, so kann dieser eine Fehlermeldung ausgeben.

Der Vorteil der erfindungsgemäßen Parametrierung besteht insbesondere darin, dass für den Anwender der Aufwand der Parametrierung eines AS-i Slaves 4,5,6 enorm reduziert wird und ferner die Gefahr einer Fehlparametrierung deutlich reduziert wird. Da der Anwender nun kein spezifisches Programm zur Übertragung der Parameter schreiben muss, kann der Aufwand für den Anwender stark minimiert werden. Der Anwender muss nur noch im Engineering Tool 1 den zu parametrierenden AS-i Slave 4,5,6 auswählen und die Parameter bestimmen. Abhängigkeiten zwischen den Parametern können bereits im Engineering Tool berücksichtigt werden, so dass eine Fehlkonfiguration des AS-i Slaves 4,5,6 vermieden werden kann.

## Patentansprüche

1. Verfahren zur Parametrierung eines AS-i Slaves (5) mit folgenden Schritten:
- Bestimmen der Parameter des zu parametrierenden AS-i Slaves (5) mittels eines Engineering Tools (1),
- Übertragen der bestimmten Parameter an einen AS-i Master (3) mittels eines ersten Telegramms,
- Empfangen des ersten Telegramms, welches die bestimmten Parameter des zu parametrierenden AS-i Slaves (5) enthält, mittels einer Empfangseinheit (7) des AS-i Masters (3),
- Automatisches Umwandeln des empfangenen ersten Telegramms in ein AS-i Telegramm so dass das AS-i Telegramm die bestimmten Parameter des zu parametrierenden AS-i Slaves (5) enthält,
- Senden des AS-i Telegramms, welches die bestimmten Parameter des zu parametrierenden AS-i Slaves (5) enthält, an den zu parametrierenden AS-i Slaves (5) mittels einer Sendeeinheit (9) des AS-i Master (3)
wobei zum Bestimmen der Parameter des zu parametrierenden ASi Slaves (5) mittels des Engineering Tools (1) eine Gerätebeschreibungsdatei (10) des zu parametrierenden AS-i Slaves (5) geladen wird, wobei die Gerätebeschreibungsdatei (10) einen Parametersatz des zu parametrierenden AS-i Slaves (5) umfasst, **dadurch gekennzeichnet, dass** der AS-i Master (3) überprüft ob die empfangenen Parameter des zu parametrierenden AS-i Slaves (5) zu dem am AS-i Master (3) angeschlossenen zu parametrierenden AS-i Slave (5) passen, und das AS-i Telegramm ein CTT AS-i Telegramm ist, wobei das erste Telegramm kein AS-i Telegramm ist, und das automatische Umwandeln des ersten Telegramms in das AS-i Telegramm durch eine Verarbeitungseinheit (8) des AS-i Masters (3) erfolgt, wobei die zu übertragenden Parameter eines zu parametrierenden AS-i Slaves eine Datengröße von größer als 4 Bit aufweisen.

2. Verfahren nach Anspruch 1, wobei der zu parametrierende AS-i Slave (5) das AS-i Telegramm empfängt und mittels der bestimmten Parameter des empfangenen AS-i Telegramms sich parametriert.

3. Verfahren nach Anspruch 1 oder 2, wobei im Engineering Tool (1) Parametersätze unterschiedlicher AS-i Slaves (4,5,6) hinterlegt sind, wobei der geladene Parametersatz ein Parametersatz der hinterlegten Parametersätze ist.

4. Verfahren nach Anspruch 3, wobei zum Bestimmen der Parameter des zu parametrierenden AS-i Slaves (5) der geladene Parametersatz des zu parametrierenden AS-i Slaves (5) mittels des Engineering Tools (1) modifiziert wird.

5. Verfahren nach einem der vorhergehenden Ansprüche, wobei der AS-i Slave (5) ein Fehlersignal ausgibt, sofern die durch das AS-i Telegramm übertragenen bestimmten Parameter fehlerhaft sind.

6. Verfahren nach einem der vorhergehenden Ansprüche, wobei im AS-i Master (3) die bestimmten Parameter des AS-i Slaves (5) hinterlegt werden.

7. Verfahren nach einem der vorhergehenden Ansprüche, wobei über das Engineering Tool (1) Parameter mindestens zweier zu parametrierender AS-i Slaves (5, 6) bestimmt werden und die bestimmten Parameter der mindestens zwei zu parametrierenden AS-i Slaves (5,6) mittels des ersten Telegramms an den AS-i Master (3) übertragen werden und daraufhin die Verarbeitungseinheit (8) des AS-i Masters (3) das empfangene erste Telegramm automatisch in ein AS-i Telegramm für den jeweiligen zu parametrierenden AS-i Slave (5,6) umwandelt, so dass das jeweilige AS-i Telegramm die bestimmten Parameter des zu parametrierenden AS-i Slaves (5,6) enthält, wobei die Sendeeinheit (9) des AS-i Masters (3) den mindestens zwei zu parametrierenden Slaves (5,6) jeweils das AS-i Telegramm sendet, welches die bestimmten Parameter des jeweiligen AS-i Slaves (5,6) enthält.

8. AS-i Master (3) mit einer Empfangseinheit (7), welche dazu eingerichtet ist, ein erstes Telegramm, welches Parameter aus einem Parametersatz in einer Gerätebeschreibungsdatei für einen zu parametrierenden AS-i Slave (5) enthält, zu empfangen, und einer Sendeeinheit (9), welche dazu eingerichtet ist, ein AS-i Telegramm, welches die Parameter des zu parametrierenden AS-i Slaves (5) enthält, an den zu parametrierenden AS-i Slave (5) zu senden, **dadurch gekennzeichnet, dass** der AS-i Master (3) dazu eingerichtet ist, zu überprüfen, ob die empfangenen Parameter des zu parametrierenden AS-i Slaves (5) zu dem zu parametrierenden AS-i Slave (5) passen, und dass das AS-i Telegramm ein CTT AS-i Telegramm ist, und eine Verarbeitungseinheit (8) umfasst, welche dazu eingerichtet ist, das empfangene erste Telegramm, das kein AS-i Telegramm ist, automatisch in ein AS-i Telegramm umzuwandeln, so dass das AS-i Telegramm die Parameter des zu parametrierenden AS-i Slaves (5) enthält, wobei die zu übertragenden Parameter eines zu parametrierenden AS-i Slaves eine Datengröße von größer als 4 Bit aufweisen.

9. AS-i Master (3) nach Anspruch 8, wobei der AS-i Master (3) mit der Empfangseinheit (7) ein erstes Telegramm, welches Parameter für mindestens zwei zu parametrierende AS-i Slave (5,6) enthält, empfangen kann und daraufhin das empfangene erste Telegramm automatisch in ein AS-i Telegramm für den jeweiligen zu parametrierenden AS-i Slave (5,6) umwandeln kann, so dass das jeweilige AS-i Telegramm die bestimmten Parameter des zu parametrierenden AS-i Slaves (5,6) enthält.

10. System umfassen ein Engineering Tool (1) und einen AS-i Master (5) nach einem der Ansprüche 8 bis 9, wobei das Engineering Tool (1) derart ausgebildet ist, dass mittels des Engineering Tools (1) Parameter des zu parametrierenden AS-i Slaves (5) bestimmt und mittels eines ersten Telegramms an den AS-i Master (3) übertragen werden können, wobei zum Bestimmen der Parameter des zu parametrierenden AS-i Slaves (5) mittels des Engineering Tools (1) eine Gerätebeschreibungsdatei (10) des zu parametrierenden Slaves (5) geladen wird, wobei die Gerätebeschreibungsdatei einen Parametersatz des zu parametrierenden AS-i Slaves (5) umfasst.

## Claims

1. Method for parameterising an AS-i slave (5) having the following steps:
- Determining the parameters of the AS-i slave (5) to be parameterised by means of an engineering tool (1),
- Transmitting the determined parameters to an AS-i master (3) by means of a first telegram,
- Receiving the first telegram, which contains the determined parameters of the AS-i slave (5) to be parameterised, by means of a receive unit (7) of the AS-i master (3),
- Automatically converting the received first telegram into an AS-i telegram so that the AS-i telegram contains the determined parameters of the AS-i slave (5) to be parameterised,
- Sending the AS-i telegram, which contains the determined parameters of the AS-i slave (5) to be parameterised, to the AS-i slave (5) to be parameterised by means of a send unit (9) of the AS-i master (3)
wherein in order to determine the parameters of the AS-i slave (5) to be parameterised by means of the engineering tool (1), a device description file (10) of the AS-i slave (5) to be parameterised is loaded, wherein the device description file (10) includes a parameter set of the AS-i slave (5) to be parameterised, **characterised in that** the AS-i master (3) checks whether the received parameters of the AS-i slave (5) to be parameterised correspond to the AS-i slave (5) to be parameterised and connected to the AS-i master (3) and the AS-i telegram is a CTT AS-i telegram, wherein the first telegram is not an AS-i telegram and the automatic conversion of the first telegram into the AS-i telegram is carried out by a processing unit (8) of the AS-i master (3), wherein the parameters to be transmitted of an AS-i slave to be parameterised have a data size of greater than 4 bits.

2. Method according to claim 1, wherein the AS-i slave (5) to be parameterised receives the AS-i telegram and parameterises itself by means of the determined parameters of the received AS-i telegram.

3. Method according to claim 1 or 2, wherein parameter sets of different AS-i slaves (4, 5, 6) are stored in the engineering tool (1), wherein the loaded parameter set is a parameter set of the stored parameter sets.

4. Method according to claim 3, wherein the loaded parameter set of the AS-i slave (5) to be parameterised is modified by means of the engineering tool (1) in order to determine the parameters of the AS-i slave (5) to be parameterised.

5. Method according to one of the preceding claims, wherein the AS-i slave (5) outputs a fault signal, provided the determined parameters transmitted by the AS-i telegram are faulty.

6. Method according to one of the preceding claims, wherein the determined parameters of the AS-i slave (5) are stored in the AS-i master (3).

7. Method according to one of the preceding claims, wherein parameters of at least two AS-i slaves (5, 6) to be parameterised are determined by way of the engineering tool (1) and the determined parameters of the at least two AS-i slaves (5, 6) to be parameterised are transmitted by means of the first telegram to the AS-i master (3) and thereupon the processing unit (8) of the AS-i master (3) converts the received first telegram automatically into an AS-i telegram for the respective AS-i slave (5, 6) to be parameterised so that the respective AS-i telegram contains the determined parameters of the AS-i slave (5, 6) to be parameterised, wherein the send unit (9) of the AS-i master (3) transmits the AS-i telegram to the at least two slaves (5, 6) to be parameterised, said AS-i telegram containing the determined parameters of the respective AS-i slave (5, 6).

8. AS-i master (3) with a receive unit (7), which is set up to receive a first telegram, which contains parameters from a parameter set in a device description file for an AS-i slave (5) to be parameterised, and a send unit (9), which is set up to transmit an AS-i telegram, which contains the parameters of the AS-i slave (5) to be parameterised, to the AS-i slave (5) to be parameterised, **characterised in that** the AS-i master (3) is set up to check whether the received parameters of the AS-i slave (5) to be parameterised correspond to the AS-i slave (5) to be parameterised, and that the AS-i telegram is a CTT AS-i telegram, and a processing unit (8), which is set up to convert the received first telegram, which is not an AS-i telegram, automatically into an AS-i telegram, so that the AS-i telegram contains the parameters of the AS-i slave (5) to be parameterised, wherein the parameters to be transmitted of an AS-i slave to be parameterised have a data size of greater than 4 bits.

9. AS-i master (3) according to claim 8, wherein the AS-i master (3) with the receive unit (7) can receive a first telegram, which contains parameters for at least two AS-i slaves (5, 6) to be parameterised, and thereupon can automatically convert the received first telegram into an AS-i telegram for the respective AS-i slave (5, 6) to be converted so that the respective AS-i telegram contains the determined parameters of the AS-i slave (5, 6) to be parameterised.

10. System including an engineering tool (1) and an AS-i master (5) according to one of claims 8 to 9, wherein the engineering tool (1) is embodied in that parameters of the AS-i slave (5) to be parameterised can be determined by means of the engineering tool (1) and can be transmitted by means of a first telegram to the AS-i master (3), wherein in order to determine the parameters of the AS-i slave (5) to be parameterised by means of the engineering tool (1), a device description file (10) of the AS-i slave (5) to be parameterised is loaded, wherein the device description file includes a parameter set of the AS-i slave (5) to be parameterised.

## Revendications

1. Procédé de paramétrage d'un esclave AS-i comprenant les stades suivantes :
- on détermine les paramètres de l'esclave (5) AS-i à paramétrer au moyen d'un engineering tools (1),
- on transmet les paramètres déterminés à un maître (3) AS-i au moyen d'un premier télégramme,
- on reçoit le premier télégramme, qui contient le paramètre déterminé de l'esclave (5) AS-i à paramétrer, au moyen d'une unité (7) de réception du maître (3) AS-i,
- on transforme automatiquement le premier télégramme reçu en un télégramme AS-i, de manière à ce que le télégramme AS-i contienne des paramètres déterminés de l'esclave (5) AS-i à paramétrer,
- on envoie le télégramme AS-i, qui contient les paramètres déterminés de l'esclave (5) AS-i à paramétrer, à l'esclave (5) AS-i à paramétrer au moyen d'une unité (9) d'émission du maître (3) AS-i,
dans lequel, pour déterminer les paramètres de l'esclave (5) AS-i à paramétrer au moyen de l'engineering tools (1), on charge un fichier (10) de description d'appareil de l'esclave (5) AS-i à paramétrer, le fichier (10) de description d'appareil comprenant un jeu de paramètres de l'esclave (5) AS-i à paramétrer, **caractérisé en ce que** le maître (3) AS-i contrôle si les paramètres, reçus de l'esclave (5) AS-i à paramétrer, s'adaptent à l'esclave (5) AS-i à paramétrer, raccordé au maître (3) AS-i, et le télégramme AS-i est un télégramme AS-i CTT, le premier télégramme n'étant pas un télégramme AS-i et la transformation automatique du premier télégramme en un télégramme AS-i s'effectue par une unité (8) de traitement du maître (3) AS-i, les paramètres à transmettre d'un esclave AS-i à paramétrer ayant une dimension de données plus grande que 4 bits.

2. Procédé suivant la revendication 1, dans lequel l'esclave (5) AS-i à paramétrer reçoit le télégramme AS-i et se paramétrise au moyen des paramètres déterminés du télégramme AS-i reçu.

3. Procédé suivant la revendication 1 ou 2, dans lequel des jeux de paramètres d'esclave (4, 5, 6) AS-i différents sont mémorisés dans l'engineering tool (1), le jeu de paramètres chargé étant un jeu de paramètres parmi les jeux de paramètres mémorisés.

4. Procédé suivant la revendication 3, dans lequel, pour déterminer les paramètres de l'esclave (5) AS-i à paramétrer, on modifie, au moyen de l'engineering tools (1) le jeu de paramètres chargé de l'esclave (5) AS-i à paramétrer.

5. Procédé suivant l'une des revendications précédentes, dans lequel l'esclave (5) AS-i émet un signal d'erreur dès que les paramètres déterminés, et transmis par le télégramme AS-i, sont défectueux.

6. Procédé suivant l'une des revendications précédentes, dans lequel on mémorise, dans le maître (3) AS-i, des paramètres déterminés de l'esclave (5) AS-i.

7. Procédé suivant l'une des revendications précédentes, dans lequel on détermine, par l'engineering tool (1), des paramètres d'au moins deux esclaves (5, 6) AS-i à paramétrer et on transmet des paramètres déterminés des au moins deux esclaves (5, 6) AS-i à paramétrer, au moyen du premier télégramme, au maître (3) AS-i et ensuite, l'unité (8) de traitement du maître (3) AS-i transforme le premier télégramme reçu automatiquement en un télégramme AS-i pour l'esclave (5, 6) AS-i respectif à paramétrer, de manière à ce que le télégramme AS-i respectif contienne des paramètres déterminés de l'esclave (5, 6) AS-i à paramétrer, l'unité (9) d'émission du maître (3) AS-i envoyant, aux au moins deux esclaves (5, 6) à paramétrer, le télégramme AS-i respectif, qui contient les paramètres déterminés de l'esclave (5, 6) AS-i respectif.

8. Maître (3) AS-i comprenant une unité (7) de réception, conçu pour recevoir un premier télégramme, qui contient des paramètres d'un premier jeu de paramètres dans un fichier de description d'appareil pour un esclave (5) AS-i à paramétrer et une unité (9) d'émission conçue pour émettre un télégramme AS-i, qui contient les paramètres de l'esclave (5) AS-i à paramétrer, à l'esclave (5) AS-i à paramétrer, **caractérisé en ce que** le maître (3) AS-i est conçu pour contrôler si les paramètres reçus de l'esclave (5) AS-i à paramétrer s'adaptent à l'esclave (5) AS-i à paramétrer et **en ce que** le télégramme AS-i est un télégramme AS-i CTT et comprend une unité (8) de traitement conçue pour transformer automatiquement, en un télégramme AS-i, le premier télégramme reçu, qui n'est pas un télégramme AS-i, de manière à ce que le télégramme AS-i contiennent des paramètres de l'esclave (5) AS-i à paramétrer, les paramètres à transmettre d'un esclave AS-i à paramétrer ayant une dimension de données plus grande que 4 bits.

9. Maître (3) AS-i suivant la revendication 8, dans lequel le maître (3) AS-i peut, par l'unité (7) de réception, recevoir un premier télégramme, qui contient des paramètres pour au moins deux esclaves (5, 6) AS-i à paramétrer, et ensuite peut transformer le premier télégramme reçu automatiquement en un télégramme AS-i pour l'esclave (5, 6) AS-i respectif à paramétrer, de manière à ce que le télégramme AS-i respectif contienne des paramètres déterminés de l'esclave (5, 6) AS-i à paramétrer.

10. Système comprenant un engineering tool (1) et un maître (5) AS-i suivant l'une des revendications 8 à 9, l'engineering tool (1) étant constitué de manière à pouvoir déterminer, au moyen de l'engineering tools (1), des paramètres de l'esclave (5) AS-i à paramétrer et à pouvoir les transmettre, au moyen d'un premier télégramme, au maître (3) AS-i, dans lequel, pour déterminer les paramètres de l'esclave (5) AS-i à paramétrer, au moyen de l'engineering tools (1), on charge un fichier (10) de description d'appareil de l'esclave (5) à paramétrer, dans lequel le fichier de description d'appareil comprend un jeu de paramètres de l'esclave (5) AS-i à paramétrer.
